Europäisches Patentamt

European Patent Office

Office européen des brevets

(11) Publication number: **0 347 947**
**A2**

## (12) EUROPEAN PATENT APPLICATION

(21) Application number: **89111512.3**

(51) Int. Cl.⁴: **G11B 23/087**

(22) Date of filing: **24.06.89**

(30) Priority: **24.06.88 JP 157480/88**
**27.06.88 JP 158759/88**
**27.06.88 JP 158760/88**
**27.06.88 JP 158761/88**

(43) Date of publication of application:
**27.12.89 Bulletin 89/52**

(84) Designated Contracting States:
**DE GB**

(71) Applicant: **Hitachi Maxell Ltd.**
**No 1-1-88, Ushitora Ibaraki-shi**
**Osaka-fu(JP)**

(72) Inventor: **Mizutani, Hikaru**
**1-18-25, Sakurai**
**Minoo-shi Osaka-fu(JP)**

(74) Representative: **Selting, Günther, Dipl.-Ing. et al**
**Patentanwälte von Kreisler, Selting, Werner**
**Deichmannhaus am Hauptbahnhof**
**D-5000 Köln 1(DE)**

(54) **Tape Cartridge.**

(57) A tape cartridge comprises a front lid 9 with a rear lid 13 in front of a case body 1, there is projected a flange portion 20 inwardly at the lower end portion of a front plate 17 of the front lid 9 and there is defined a concave portion 21 immediately on the upper portion of the flange 20 inside the front plate 17, so that the lower edge portion of the rear lid 13 is entered in the concave portion 21 when the front lid 9 is in a closing position and is abutted onto the flange 20, thereby improving a dust sealing efficiency between the lower end portion of the front lid and the lower end portion of the rear lid, also preventing the engagement of a tape with the flange tip portion when the front lid is opened.

Fig. 1

# TAPE CARTRIDGE

## BACKGROUND OF THE INVENTION

thereby causing a damage of a tape.

## SUMMARY OF THE INVENTION

### FIELD OF THE INVENTION

The present invention relates to a tape cartridge comprising a front lid with a rear lid in front of the body case thereof, having a specific dust seal strucure between the front lid and the rear lid.

### DESCRIPION OF THE PRIOR ART

In such a tape cartridge as mentioned above, since there occurs a troublesomeness such an occurrence of a drop out of a magnetic layer from a tape surface if dust enters inside the tape cartridge from the outside when the tape cartridge is not in use, therefore, it is desired that the portion between the front and the rear lids should be securely sealed in order to prevent the entrance of dust therein.

In particular, in the case of a metal evaporation tape having a magnetic layer made of metal material such as iron, cobalt, cobalt-nickel or cobalt-phosphorus formed thereon, since the magnetic layer evaporated on the tape is oxidized to be corroded if the magnetic layer is contact with harmful floating particles in the air, the dust sealing efficiency of the front and rear lid portions of the tape cartridge must be performed more strictly.

In the prior art, in order to satisfy the demand as mentioned above, there has been proposed a remarkable structure of a tape cartridge in the Japanese Patent Laid Open No. 164067/1983 for example, wherein there is inwardly projected a flange portion at the lower edge of the front lid so that the lower edge portion of the rear lid is overlapped onto said flange portion of the front lid in a closing state of the front lid.

In the conventional tape cartridge mentioned above, since the overlapped portion between the lower end portion of the front lid and the lower end portion of the rear lid is provided inside a pocket for loading a tape, the structure of the conventional tape cartridge is effective for improving the sealing performance. However, the flange portion is inwardly projected so high from the lower end of the the front lid that the pivoting locus of the tip portion of the flange is relatively near to the tape passing through the portion between the front lid and the rear lid, and when the front lid is opened in a state with a tape loosened, the lower edge portion of the tape is caught by the end tip portion of the flange,

An essential object of the present invention is to provide a tape cartridge improving a dust sealing efficiency between a lower end portion of a front lid and a lower end portion of a rear lid in a manner similar to that in the prior art, also preventing the engagement of the tape with the flange tip portion when the front lid is opened.

In order to accomplish the object mentioned above, in a tape cartridge according to the present invention comprising a front lid 9 with a rear lid 13 in front of a case body 1, there is projected a flange portion 20 inwardly at the lower end portion of a front plate 17 of a front lid 9 and there is defined a concave portion 21 integrally connected to the upper surface of said flange 20 immediately on the upper portion of the flange 20 inside said front plate 17, so that the lower edge portion of a rear lid 13 is entered in said concave portion 21 when the front lid 9 is in the closing position so as to be abutted onto the flange 20. Moreover, the lower edge portion of the rear lid 13 may be adjacent to the upper surface of the flange 20 and may not be completely connected to the upper surface of the flange 20.

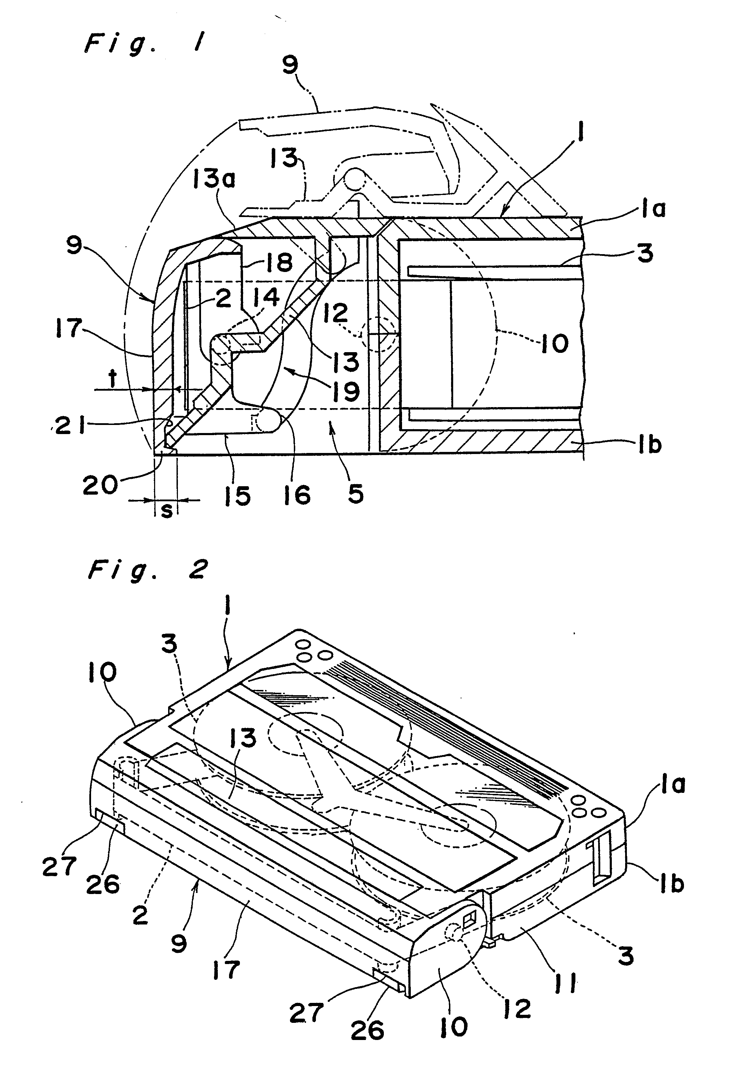

As shown in Fig. 1, the lower edge portion of the rear lid 13 is abutted onto the flange 20 inwardly projected at the lower end portion of the front lid 9 inside a pocket 5 formed in the front portion of the case body 1 when the tape cartridge is not in use, whereby a structure of a labyrinth type seal can be obtained, preventing the entrance of dust in the air into the tape feeding space between the front lid 9 and the rear lid 13.

Since the flange 20 is integrally formed under the concave portion 21, even though the effective longitudinal length of the flange 20 is large, the height of the projection of the flange 20 projected from the inner surface of the front lid 9 is so small that the locus of the swing of the tip portion of the flange 20 around the pivoting center of the front lid 9 is apart from the lower edge of the tape 2. Accordingly, even if the front lid 9 is opened and operated in a state of the tape 2 loosened forward a little, it is prevented that the lower edge portion of the tape 2 is caught by the tip portion of the flange 20.

As described above, according to the present invention, upon performing a simple improvement of an abutment sealing structure between the lower end portion of the front lid and the lower end portion of the rear lid, the dust sealing efficiency of the corresponding portion can be improved and the damage of the tape due to being caught by the tip portion of the flange can be prevented when the front lid is opened.

The features of the present invention which are believed to be novel are set forth with particularity in the appended claims. The present invention, both as to its organization and manner of operator, together with further objects and advantages thereof, may best be understood by reference to the following description, taken in conjunction with the accompanying drawings. ·

## BRIEF DESCRIPTION OF THE DRAWINGS

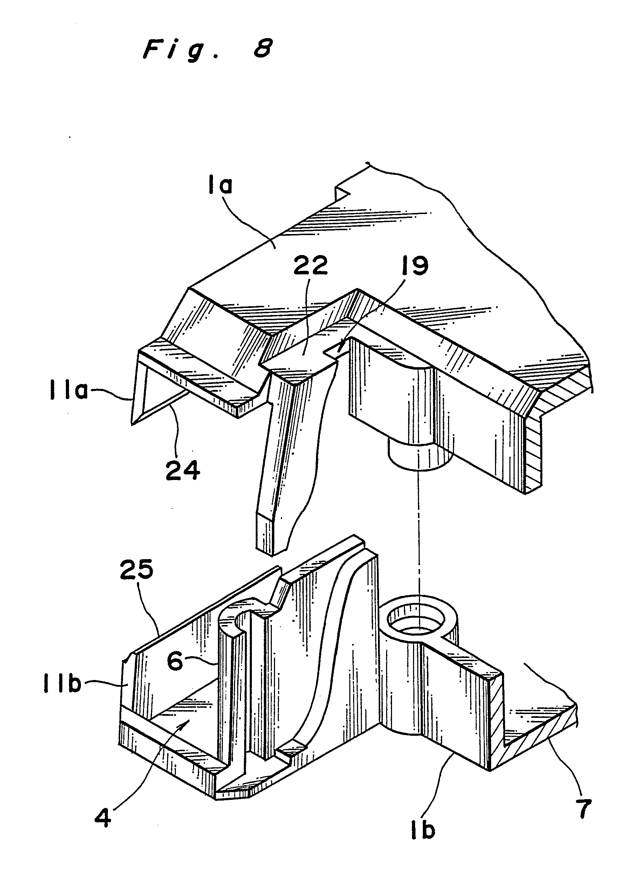

Figs. 1 to 16 show embodiments of a tape cartridge according to the present invention, wherein

Fig. 1 is a longitudinal sectional side view of the front portion,

Fig. 2 is a schematic perspective view of the entire part,

Fig. 3 is an exploded perspective view,

Fig. 4 is a plan view of a front and left side portion,

Fig. 5 is a bottom plan view of a front and left side portion with a partial cut portion,

Fig. 6 is a sectional view along the line VI-VI shown in Fig. 4,

Fig. 7 is a sectional view along the line VII-VII shown in Fig. 4,

Fig. 8 is an exploded perspective view of the front and left side portion of the body case,

Fig. 9 is a plan view of the entire part of the tape cartridge under the condition that the upper half case is detached.

Fig. 10 is a perspective view of a stopper of reel breaking means seeing from the lower side,

Fig. 11 is a cross sectional view of the front portion of said stopper,

Fig. 12 is an exploded perspective view of the reel breaking means,

Fig. 13 is a longitudinal sectional view of the reel breaking means,

Fig. 14 is a sectional view along the line V-V shown in Fig. 13,

Fig. 15 is an enlarged plan view of the reel breaking means, and

Fig. 16 is an exploded perspective view of a sensor portion.

## DETAILED DESCRIPTION OF THE PREFERRED

## EMBODIMENT

In the drawings, there is shown a tape cartridge for video tape recording of 8 mm as a first embodiment of the present invention.

In Figs. 1 to 3, reference numeral 1 denotes a case body which comprises top half and bottom half cases 1a and 1b made of plastic resin material combined in a lid fitting manner. In the right and left portions in the case body 1 are rotatably provided tape reels 3 and 3 for reeling a tape 2. In the right and left corners in front of the case body 1 are formed tape drawing openings 4 and 4 in a manner of forming openings in the front portion thereof, and in the intermediate portion in front of the case body 1 is defined a pocket 5 for drawing out the tape 2 in a manner of recess formed inward the case body between the right and left tape drawing openings 4 and 4. Tape path regulating pins 6 and 6 are integrally formed upward from a bottom wall 7 of the case body 1 in the right and left tape drawing openings 4 and 4 corresponding to the right and left sides of the pocket 5 and the tape 2 is led out from one of the tape reels 3 to the front portion of the body case 1 so as to be reeled onto another tape reel 3 through the tape path regulating pins 6 and 6.

The case body 1 comprises a front lid 9 for covering and protecting the front side of the tape 2 set between the tape regulating pins 6 and 6 when the tape cartridge is not in use. The front lid 9 comprises a longitudinal closing member for closing the front portion of the body case 1 throughout the right and left edges thereof and comprises connection members 10 and 10 connected backward from the right and left edges of the longitudinal closing member. The front lid 9 is rotatably pivoted around pivot shafts 12 and 12 in a state that the connection members 10 and 10 are circumscribed to the front edges of side walls 11 and 11. The front lid 9 is rotatably biased in the closing direction all the time by a spring member (not shown) provided on the right pivot shaft 12.

There is provided a rear lid 13 inside the front lid 9, which is situated in the pocket 5 when the front lid 9 is attached to the case body 1. The rear lid 13 is opened and closed in conjunction with the opening and closing operations of the front lid 9. That is to say, there is projected pivot shafts 14 on the right and left edges in the middle portion between the top and the bottom of the rear lid 13, and connection members 15 and 15 are connected to the inside of the right and left edges of the rear lid 13 and cam follower pins 16 and 16 are projected on the connection members 15 and 15. The pivot shafts 14 and 14 are rotatably pivoted by right and left brackets 18 and 18 projected downward from the top edges of the front plate 17 of the front lid 9 and the cam follower pins 16 are engaged in cam slots 19 of a generally S character shape formed in the right and left side walls of the pocket 5.

When the front plate 17 of the front lid 9 is in a vertical closing state, the rear lid 13 is pivoted around the pivot shafts 14 due to the balance of the tare weight of the rear lid 13 and the lower end portion of the rear lid 13 abuts to the lower end portion of the front plate 17 so as to close the opening inside the front plate 17 including the lower portion of the tape 2 passing through the inside of the front plate 17, and also the top plate 13a of the rear lid 13 closes the upper portion of the opening of the pocket 5. When the rear lid 9 is oscillated and opened upward, the cam follower pins 16 are guided along the cam guide slots 19 and the rear lid 13 is moved upward together with the front lid 9 without interfering the tape 2 by the rear lid 13 so as to open the front portion of the pocket 5 as shown by virtual lines in Fig. 1.

In the tape cartridge comprising the front lid 9 with the rear lid 13 as mentioned above, the present invention is an improvement of a sealing structure between the lower end portion of the front lid 9 and the lower end portion of the rear lid 13 when the tape cartridge is not in use.

As shown in Fig. 1, in the closing state of the front lid 9, the flange 20 is projected inwardly at the lower edge of the front plate 17 of the front lid 9 and the concave portion 21 is defined in the upper portion of the flange 20 inside the front plate 17 to the upper surface of the flange 20, whereby the lower edge of the rear lid 13 is entered into the concave portion 21 so as to be abutted onto the upper surface of the flange 20.

In this case, the longitudinal width s of the flange 20 inwardly projected is set to be larger than the thickness t of the front plate 17 (s ≧ t). Moreover, the upper surface of the flange 20 is made to be a taper surface slanted lower toward the inside (rearward) in order not to engage with the lower edge of the rear lid 13 when the front lid 9 is opened.

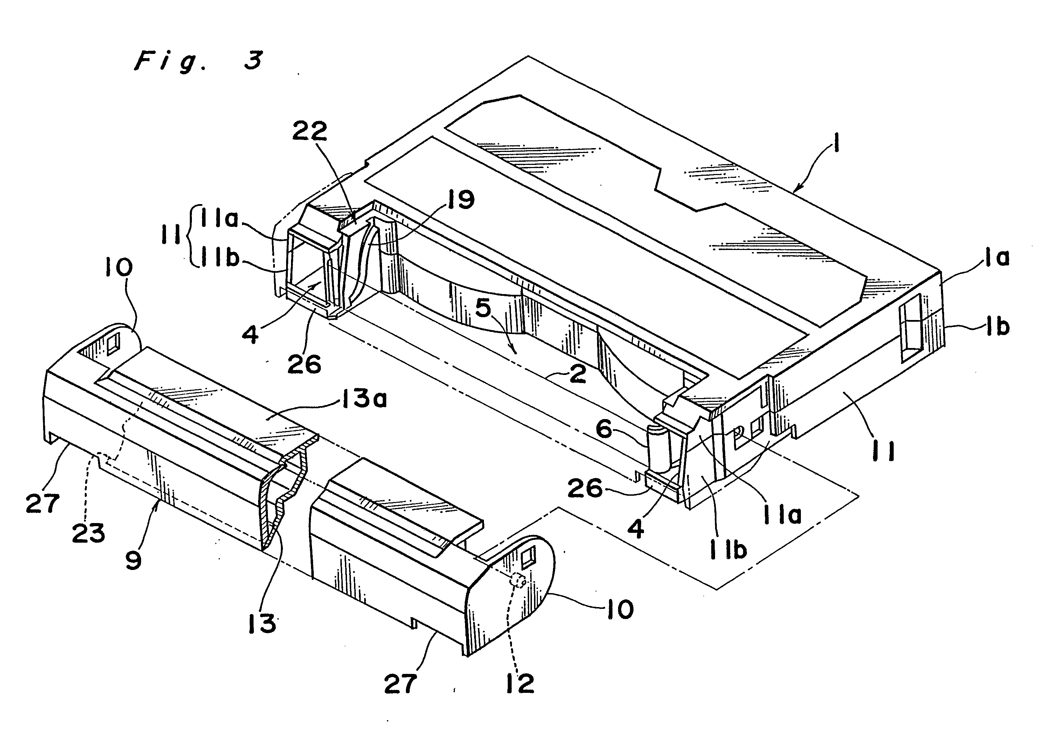

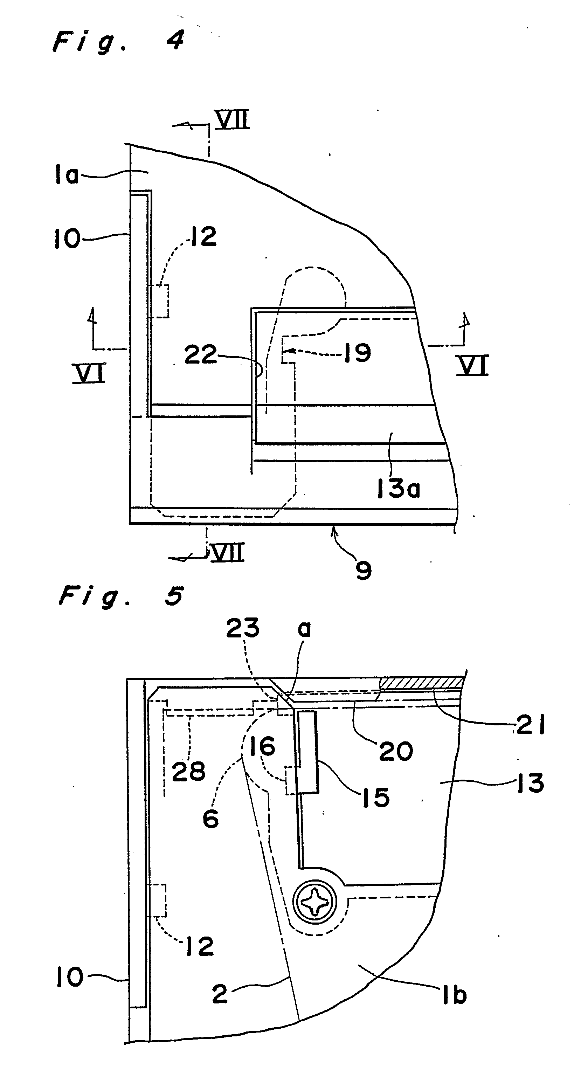

As shown in Figs. 3 and 4, in the right and left sides of the pocket 5, there are formed stair portions 22 for supporting the right and left edges of the upper plate 13a of the rear lid 13 in a manner that the stair portions 22 are formed to be recesses spread to the outer side farther than the cam slots 19, whereby the top edges of the cam slots 19 are perfectly closed by the upper plate 13a of the rear lid 13, thereby preventing the entrance of the floating dusts in the air into the portion between the front lid 9 and the rear lid 13 through the cam slots 19.

Moreover, as shown in Fig. 5, there are provided tongue portions 23 and 23 projected outwardly in the both sides of the lower edge of the rear lid 13 in order to close gaps a defined between the side edges of the rear lid 13 and the front edges of the tape regulating pins 6, thereby preventing the direct exposure of the tape 2 into the pocket 5 through the gaps a.

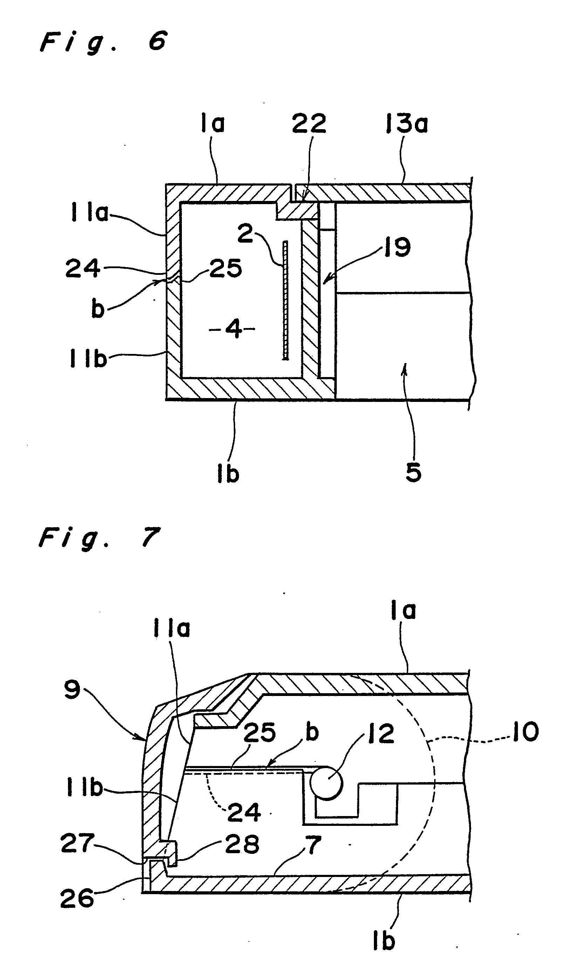

As shown in Figs. 6 and 8, in the front side of the pivoting point of the front lid in the side walls 11 of the body case 1, there is formed a slight gap b in order to fast the top and bottom cases 1a and 1b more closely in the body case in the rear of the pivoting point. In order to prevent the entrance of the floating dust in the air through the gap b, the lower edge 24 of the side wall 11 of the top half case 1a is abutted to the upper edge 25 of the side wall 11b of the bottom half case 1b by forming taper shapes so as to engaged with each other.

As shown in Fig. 3, there are formed projection walls 26 projected from the bottom wall 7 between the right and the left edges of the front edge portions of the respective tape drawing openings 4 and the lower limit of the tape movement is regulated by abutting the tape 2 onto the projection walls 26. And there are formed cut recesses 27 at the lower edges of the right and left end portions of the front lid 9 corresponding to the projection walls 26. the deck members are abutted to the front surface of the projection walls 26 through the cut recesses 27, whereby the limit of pressing the tape cartridge to the deck is regulated by the abutment therebetween. However, since the dust sealing performance is not sufficient even in the corresponding abutment portions between the projection walls 26 and the cut recesses 27, there are formed taper projections 28 projected downwardly from the inner sides of the upper edges of the cut recesses 27 and the taper projections 28 are inlaid inside the projection walls 26, thereby preventing the entrance of the floating dust into the tape drawing openings 4 through the cut recesses 27.

EXAMPLES OF MODIFICATION

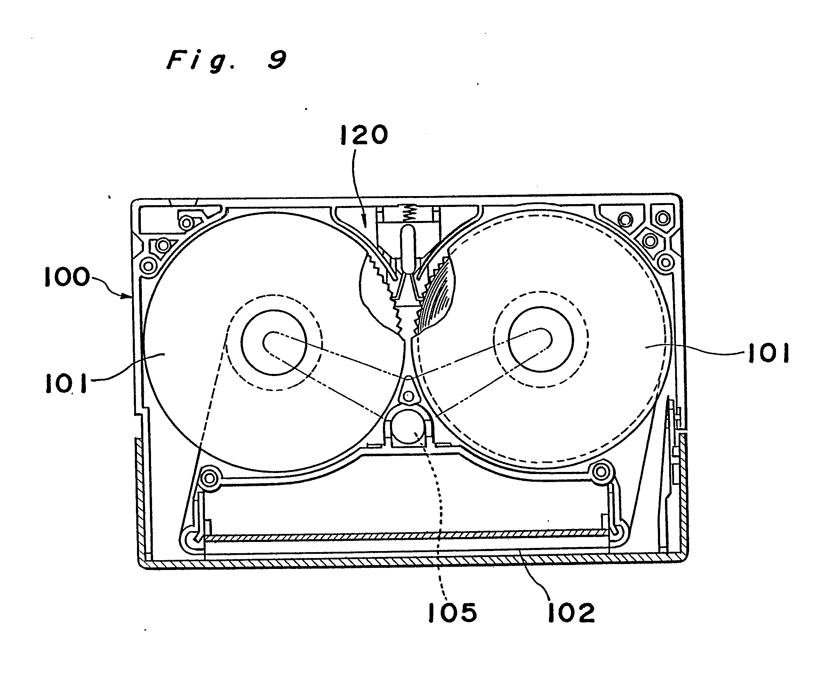

In a tape cartridge according to the present invention as shown in Fig. 9, there are provided reel break means 120 and a sensor hole 105 for detecting a tape edge portion on a bottom half case 100b, wherein dust preventing structures other than that used in the above mentioned embodiment are adopted in the reel break means 120 and to the sensor hole 105. Although it is possible to surely prevent the entrance of dust floating in the air into the cartridge case with a rational and appropriate combination of the dust preventing structures according to the present invention, it may be properly selectable which dust preventing structure of those of the present invention should be adopted according to the circumstance where the tape cartridge is used.

## EXAMPLE 1

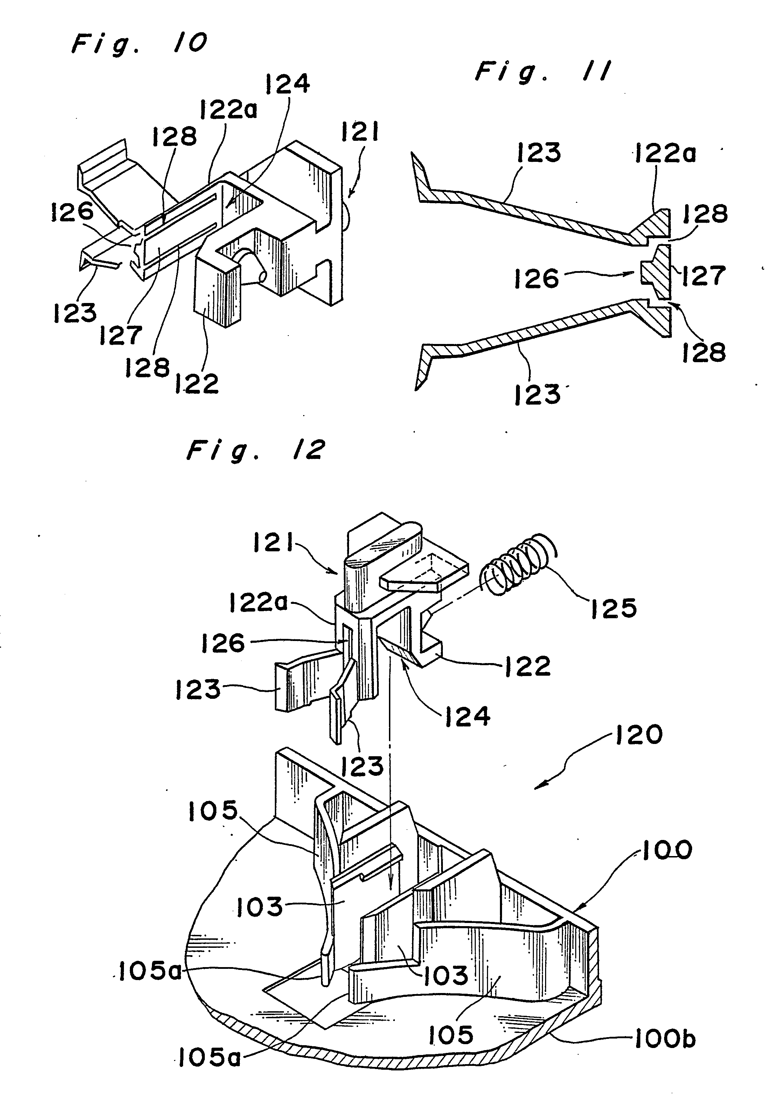

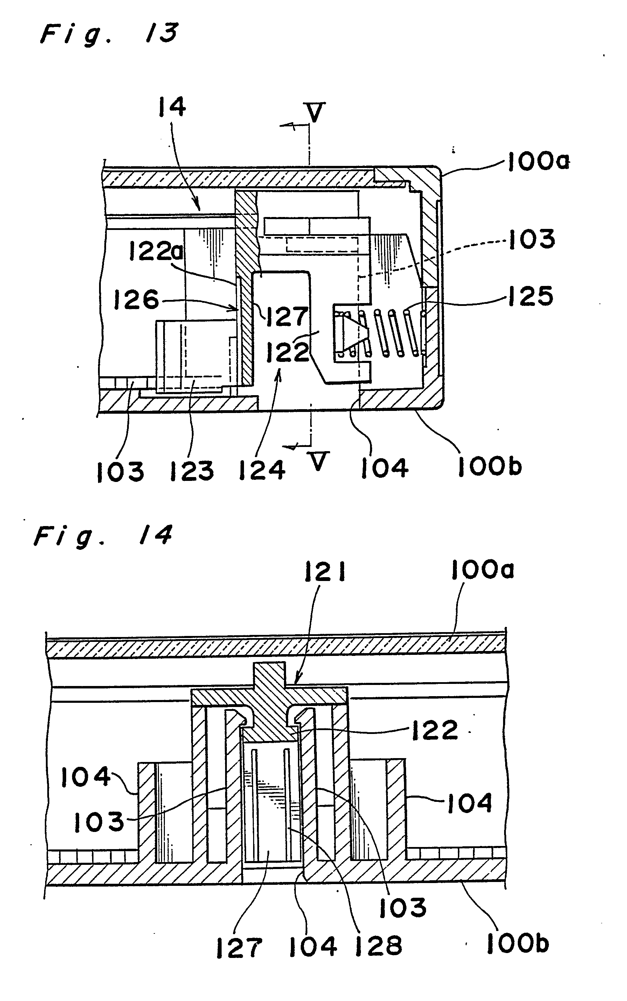

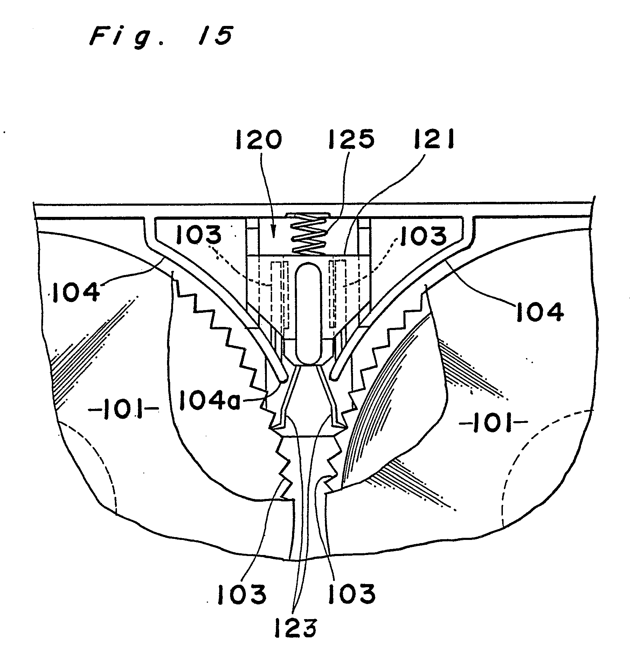

Figs. 10 to 15 show a first example of the modification of the present invention.

Referring to the operation of the reel break means 120, a sliding base 122 of a stopper means 121 is guided by a pair of guide walls 103 and 103 and is linearly slidable back and forth between the break position in front of the abutment position of the tip portions of the break members 123 and 123 to the engagement walls 103 in the outer peripheral portions of the lower flanges below the right and left tape reels 101 and 101 and the break releasing position at the rear of the portion in which the end portions of the break members 123 and 123 are disengaged from the engagement walls 103 and is usually biased by pressing force of a coil spring 125 forward to the break position. Accordingly, when the tape cartridge is not in use, the tip portions of the break members 123 and 123 both in the right and left sides are biased to be expanded toward the respective tape reels 101 by the resiliency of the break members themselves and the tip portions of the break members 123 are always engaged with the engagement walls 103, thereby preventing the rotation of the respective tape reels 101 in the direction of drawing out the tape. Moreover, the break members 123 and 123 are so operated as to rotate the respective tape reels 101 in the tape reeling up direction due to the biased force of the stopper 121 forward advanced by the coil spring 125.

When the tape cartridge is loaded in a video deck, since the engagement hole 124 formed in the sliding member 122 is always facing to the operation hole 104, the break releasing member in the video deck is engaged with the engagement hole 124 through the operation hole 104, whereby the entire part of the stopper 121 is slidden backward to the break releasing position against the resiliency of the coil spring 125. As the break members 123 are moved backward, the break members 123 are inwardly pressed to be deformed each other by the sliding contact of the end portions 105a of the vertical ribs 105, so that the end portions of the break members 123 are disengaged from the outer peripherals of the flanges of the respective tape reels 101 and the respective tape reels 101 becomes rotatable freely.

The feature of the present invention is in the improvement of the stopper 121 in the above mentioned reel break means 123 as follows.

That is to say, as shown in Figs. 10 to 12, in the front end portion 122a of the sliding member 122, there is formed a vertical longitudinal slit 126 for separating the right and left break means 123 and 123, whereby the flexibility at the base portions of the respective break members 123 is made large when the break members 123 are resiliently deformed in the right and left directions so that the stresses are diffused. In the intermediate portion in the right and left direction of the slit 126, there is provided a vertical wall 127 with a shape of a forward taper in section projected from the upper wall. At this time, in the spaces between the longitudinal wall 127 and the front edge portions 122a of the sliding member 122, there are defined right and left slight gaps 128 and 128 allowing the inward resilient deformation of the front edge portions 122a of the sliding member 122. the gaps 128 are formed in a shape of labyrinth in sectional view as shown in Fig. 11 in order not to directly connect the slit 126 to the engagement hole 124, thereby preventing that the floating dust entered in the engagement hole 124 through the operation hole 104 is easily entered in the cartridge case through the slit 126.

In the first example, although the reel break means 120 is provided as shown in Fig. 9, it is not limited to this but the reel break means 120 may be disposed in the front middle portion in the body case 100. Moreover, the coil spring member 125 may be integrally projected from the stopper 121 in a shape of tongue member.

## EXAMPLE 2

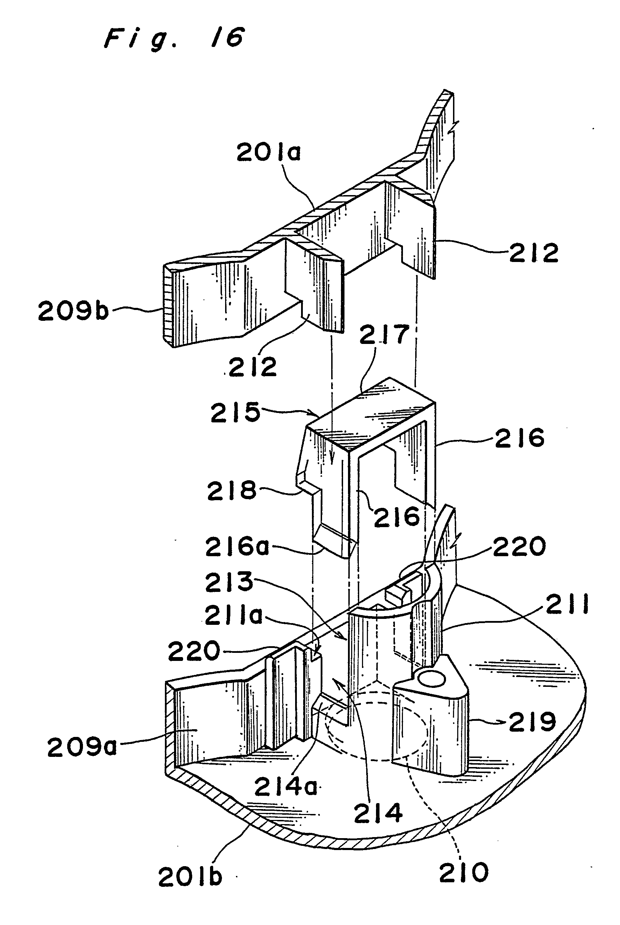

Fig. 16 shows a second example of the modification, wherein the upper peripheral side surface is surrounded by a lower half portion 209a of a case front wall 209 and a light shield wall 211 of a U character shape in plan view of which the both edges are connected to said lower half portion 209a, said lower half portion 209a and said light shield wall 211 respectively standing on the lower half case 201b. In the right and left front portions of the light shield wall 211 are formed cut recesses 213 and 213 in a form of opening upward. On the surface of the upper half case 201a, there are vertically formed a pair of right and left light shield walls 212 and 212 for forming light passage holes 214 and 214 between the light shield walls 212 and 211 facing to said cut recesses 213 and 213. The respective light shield walls 212 are vertically formed in a plate form between the upper half 209b abutted to the lower half portion 209a of the case front wall 9 and the upper wall of the case body.

Subsequently, in the case body 201, there is provided another transparent piece 215 for closing the light passage holes 214 and 214. The transparent piece member 215 is made of transparent plastic mold material of generally reversed U character shape having right and left vertical walls 216 and 216 and a connection portion 217 connecting between the top edges of the right and left vertical walls 216 and 216 integrally molded, which is previously attached onto the lower half 201b before the step of covering the upper half 201a onto the lower half 201b.

That is to say, the vertical walls 216 and 216 of the transparent piece member 215 are inserted to the respective cut recesses 213 and 213 of the light shield wall 211 projected on the lower half case 201b in a strictly contact state so that the bottom edges 216a of the vertical walls 216 are abutted onto the lower edges 214a of the light passage holes 214 in a taper abutment manner and the transparent piece member 215 is temporarily combined with the light shield wall 211. Moreover, in the front lower sides of the respective vertical walls 216 are formed stair portions which are received to be supported by the upper surfaces of the front edge portions 211a of the light shield wall 211, thereby preventing the unsteadiness of the temporary assembly of the transparent piece member 215.

When the transparent piece member 215 is mounted on the lower light shield wall 211, the height of the upper surface of the connection portion 217 is generally coincident with the height of the upper edge surface of the light shield wall 211. Subsequently, the upper half 21a is attached to the lower half 21b, thereby regulating the upward movement of the transparent piece member 215. That is to say, the inner surface of the upper wall of the upper half 201a is in contact with the outer surface of the front portion of the transparent piece member 215, thereby regulating the rise of the transparent piece member 215, and the inner surfaces of the light shield walls 212 and 212 of the upper half 201a are abutted to the outer surfaces of the upper portions of the vertical walls 216 and 216 of the transparent piece member 215, thereby regulating the displacement in the horizontal direction of the transparent piece member 215 at the time of the formal assembly.

As described above, when the transparent piece member 215 is combined with the lower light shield wall 211, the respective light passage holes 214 are closed by the transparent piece member 215, whereby the detection light can be led to a predetermined detection path A only through the light passage holes 214, preventing the entrance of dust in the air through the sensor hole 210 and the light passage holes 214.

In addition, as shown in Fig. 16, reference numeral 219 denotes a boss for engaging a screw integrally formed on the lower half 201b connected to the rear portion of the light shield wall 211, and reference numeral 220 denotes a connecting rib for location between the lower half portion 209a and the upper half portion 209b of the case front wall 209 integrally connected to the front edge of the light shield wall 211.

In the second example, although the right and the left vertical walls 216 and 216 of the transparent piece member 215 are connected through connection member 217, the front portions of the upper edges of the right and left vertical walls 216 and 216 may be so connected as to form a generally U character shape in plan view opening backwardly and various modifications of the shapes of the transparent piece member 215 may be available.

## Claims

1. A tape cartridge comprising a front lid and a rear lid which is opened and closed in conjunction with the opening and closing operation of said front lid in the front portion of a case body, wherein
a flange portion is inwardly projected at a lower edge of a front board of said front lid,
a concave portion is formed in the inner surface of said front board located immediately on the upper portion of said flange portion, connected to the upper surface of said flange, and
when said front lid is in a closing state, the lower edge of said rear lid is entered to said concave portion so as to be abutted onto said flange portion.

2. The tape cartridge according to Claim 1, wherein the width s of said flange portion directed back and forth is equal to or larger than the thickness t of the front board of said front lid ( $s \geq t$ ).

3. The tape cartridge according to Claim 1, wherein a taper surface is formed on the upper surface of said flange portion, slanted toward the rear lid.

*F i g .  I*

*F i g .  2*

Fig. 3

Fig. 4

VII

1a

10

12

VI

22    19    VI

13a

VII

9

Fig. 5

23    a

28    16    20    21

6    15    13

12

10    2    1b

*Fig. 6*

*Fig. 7*

*Fig. 8*

Fig. 9

120

100

101

101

101

105  102

EP 0 347 947 A2

Fig. 10

Fig. 11

Fig. 12

*Fig. 13*

*Fig. 14*

Fig. 15

Fig. 16